# EUROPÄISCHE PATENTANMELDUNG

(11) **EP 1 431 631 A1**
(43) Veröffentlichungstag der Anmeldung: **23.06.2004**
(21) Anmeldenummer: 03023481.9
(22) Anmeldetag: 18.10.2003
(51) Int. Cl.: F16J 9/22

(54) **Kolbenring**

(30) Priorität: 18.12.2002 DE 10259691
(71) Anmelder: Federal-Mogul Friedberg GmbH, 86316 Friedberg (DE)
(72) Erfinder: Cantow, Franz, Günter, 4299 Hückeswagen (DE)

(57) **Zusammenfassung**

Kolbenring, beinhaltend eine radial äußere Lauffläche, eine radial innere Umfangsfläche sowie dazwischen verlaufende obere und untere Stirnflächen, wobei ein an der oberen Stirnfläche anstehender Druck, insbesondere Verbrennungsgasdruck, axial in Richtung der unteren Stirnfläche abbaubar ist, wobei innerhalb des Kolbenringquerschnittes laufflächenseitig, in Umfangsrichtung gesehen, mehrere sich von der oberen bis zur unteren Stirnfläche erstreckende Durchgangsbohrungen vorgebbaren Durchmessers eingebracht sind.

## Beschreibung

Die Erfindung betrifft einen Kolbenring, beinhaltend eine radial äußere Lauffläche, eine radial innere Umfangsfläche sowie dazwischen verlaufende obere und untere Stirnflächen, wobei ein an der oberen Stirnfläche anstehender Druck, insbesondere Verbrennungsgasdruck, axial in Richtung der unteren Stirnfläche abbaubar ist.

Der EP-B 0 742 875 (entsprechend DE-T2 693 11 142) ist ein Kolbenring für Brennkraftmaschinen zu entnehmen, der insbesondere in einem großen Zweitaktmotor zum Einsatz gelangen soll. Zur Ermöglichung einer Aufweitung des Ringes bei der Montage in einer Ringnut des Kolbens ist der Kolbenring mit einem Schlitz versehen, der gasdicht ausgebildet ist, um ein Durchströmen des Gasdruckes von der oberen in Richtung der unteren Stirnfläche zu verhindern. Die Außenseite des Kolbenringes weist zumindest zwei von der Oberseite zur Unterseite des Ringes verlaufende Nuten auf, wobei die Summe der Breite der Nuten 0,1 bis 1 % des Ringumfanges beträgt.

Bei diesem Stand der Technik, der in die Kolbenringlauffläche eingefräste Schlitze aufweist, können infolge der Kerbwirkung dieser Schlitze Kolbenringbrüche auftreten.

Der US-A 4,359,229 ist ein Kolbenring mit Kontrollschlitzen zu entnehmen. Die eine vorgebbare Kontur aufweisenden Schlitze erstrecken sich im wesentlichen senkrecht von der oberen zur unteren Stirnfläche. Durch diese Schlitze soll ein optimalerer Temperatur- und Spannungsausgleich innerhalb des Kolbenringquerschnittes, nicht jedoch ein Abbau des Druckes, insbesondere des Verbrennungsgasdruckes, erzeugt werden.

Kolbenringe, insbesondere für größere Zweitaktmotoren, werden mit entsprechend großem Durchmesser ausgebildet und in der Regel mit einem gasdichten Stoß versehen, der üblicherweise durch einander überlappende Endbereiche im geschlitzten Bereich gebildet wird. Durch diese Überlappung wird der an der oberen Stirnfläche, insbesondere brennraumseitig anstehende Gasdruck im wesentlichen an einer Durchströmung des Schlitzes gehindert. Die in der US-A 4,359,229 vorgesehene konstruktive Ausgestaltung der im Kolbenringquerschnitt eingebrachten Schlitze trägt dem Gasdruckabbau keine Rechnung, da die Schlitze an jeder beliebigen Stelle innerhalb der radialen Wandstärke vorgesehen sein können.

Der Erfindung liegt die Aufgabe zugrunde, ausgehend von der EP-B 0 742 875, einen Kolbenring dahingehend weiterzubilden, daß Kolbenringbeschädigungen, insbesondere durch Kerbwirkung, nicht mehr gegeben sind und demzufolge die Lebensdauer des Kolbenringes gegenüber dem Stand der Technik erhöht werden kann.

Diese Aufgabe wird dadurch gelöst, daß innerhalb des Kolbenringquerschnittes laufflächenseitig, in Umfangsrichtung gesehen, mehrere sich von der oberen bis zur unteren Stirnfläche erstreckende Durchgangsbohrungen vorgebbaren Durchmessers eingebracht sind.

Vorteilhafte Weiterbildungen des Erfindungsgegenstandes sind den Unteransprüchen zu entnehmen.

Dadurch, daß die Lauffläche nun nicht mehr durch Einbringung von Nuten im Laufflächenbereich geschwächt wird, kann an diesen Stellen auch keine Kerbwirkung mehr entstehen, da die Bohrungen in den Kolbenringquerschnitt verlegt sind. Der Gasdruck kann in Analogie zum Stand der Technik genau so gut von der oberen zur unteren Stirnfläche abgebaut werden, ohne daß eine Schwächung des Kolbenringes gegeben ist. Durch diese Maßnahme kann gegenüber dem Stand der Technik eine beträchtliche Erhöhung der Lebensdauer herbeigeführt werden.

Die Bohrungen verlaufen vorteilhafterweise unter einem vorgebbaren Neigungswinkel, beispielsweise zwischen 70 und 80° von der oberen in Richtung der unteren Stirnfläche, wobei sie, einem weiteren Gedanken der Erfindung gemäß, im Bereich der unteren Stirnfläche in die Lauffläche einlaufen, um auf diese Weise einen optimalen Abbau des Gasdruckes, insbesondere des Verbrennungsgasdruckes, herbeiführen zu können. Das von der oberen in Richtung der unteren Stirnfläche strömende Gas wird durch diese Ausgestaltung nicht in Richtung der unteren Nutwand des den Kolbenring aufnehmenden Kolbenringes geführt, sondern kann gezielt in Richtung des folgenden Kolbenringes abgebaut werden. Die Stabilität des vielfach als oberer Kolbenring ausgebildeten Kompressionsringes wird durch diese Maßnahme in keiner Weise gestört. In Umfangsrichtung gesehen können die Bohrungen unter einem Winkel zwischen 40 und 50° verlaufen.

Der Durchmesser der Bohrungen kann, in Abhängigkeit von dem äußeren Durchmesser der Lauffläche, zwischen 2 und 10 mm betragen. Der Fachmann wird, in Abhängigkeit vom jeweiligen Anwendungsfall, geeignete Parameter bezüglich Winkel und Durchmesser am jeweiligen Kolbenring vorgeben. Gleiches gilt für die Anzahl der Durchgangsbohrungen sowie deren Anordnung.

Der Erfindungsgegenstand ist anhand eines Ausführungsbeispieles in der Zeichnung dargestellt und wird wie folgt beschrieben. Es zeigen:
- Figuren 1 und 2: Verschiedene Ansichten des erfindungsgemäßen Kolbenringes;

- Figuren 3 bis 5: Unterschiedliche Querschnitte durch den Kolbenring gemäß Figuren 1 und 2;
- Figur 6: Längsschnitt durch den gasdicht ausgebildeten Stoß des Kolbenringes gemäß Figur 1.

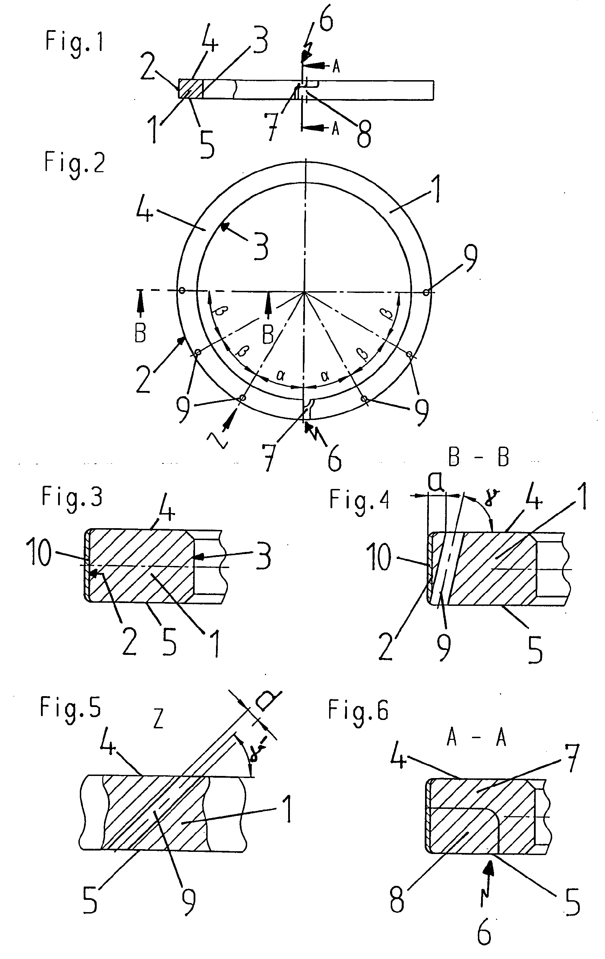

Die Figuren 1 und 2 zeigen zum einen eine Seitenansicht und zum anderen eine Draufsicht auf den erfindungsgemäßen Kolbenring 1. Der Kolbenring 1 ist in diesem Beispiel als Rechteckring ausgebildet und weist eine äußere Lauffläche 2, eine innere Umfangsfläche 3, eine obere Stirnfläche 4 und eine untere Stirnfläche 5 auf. Der Kolbenring 1 soll in diesem Beispiel in einem größeren Zweitaktmotor zum Einsatz gelangen und ist mit einem gasdicht ausgebildeten Stoß 6 versehen. Der gasdicht ausgebildete Stoß 6 wird gebildet durch einander überlappende Endbereiche 7,8. In Figur 2 ist erkennbar, daß, in Umfangsrichtung des Kolbenringes 1 gesehen, mehrere Durchgangsbohrungen 9 angeordnet sind, die unter einem vorgegebenen Umfangswinkel β voneinander beabstandet sind. Bezüglich des Stoßbereiches 6 weisen die Durchgangsbohrungen 9 einen Umfangswinkel α auf. Je nach Ausgestaltungsform des Kolbenringes 1 können die Winkel α und β gleich sein, oder aber unterschiedlich. Im vorliegenden Beispiel soll α = β sein und 30° Umfangswinkel betragen. Ausgehend vom Stoß 6 sind, in beiden Umfangsrichtungen gesehen, jeweils drei Durchgangsbohrungen 9 vorgesehen.

Die Figuren 3 bis 5 zeigen unterschiedliche Querschnitte durch den Kolbenring 1. In Figur 3 ist der volle Querschnitt des Kolbenringes 1 erkennbar. Dargestellt sind die äußere Lauffläche 2, die mit einer Laufflächenbeschichtung 10 versehen ist, die innere Umfangsfläche 3 sowie die obere 4 und die untere Stirnfläche 5. Figur 4 zeigt einen Schnitt entsprechend Linie B-B des Kolbenringes 1 gemäß Figur 2. Erkennbar ist eine Durchgangsbohrung 9, die innerhalb des Kolbenringquerschnittes von der oberen Stirnfläche 4 in Richtung der unteren Stirnfläche 5 verläuft, dergestalt, daß sie im Bereich der unteren Stirnfläche 5 in die Laufflächenschicht 10 der Lauffläche 2 einläuft. Mit vorgebbarem Abstand a wird die Durchgangsbohrung 9 unter einem Neigungswinkel γ, in diesem Beispiel 80°, in die obere Stirnfläche 4 eingebracht. Figur 5 zeigt einen Schnitt gemäß Linie Z durch die Durchgangsbohrung 9. Erkennbar ist, daß die einen vorgebbaren Durchmesser d, in diesem Beispiel 6 mm, aufweisenden Durchgangsbohrungen 9, in Umfangsrichtung des Kolbenringes 1 gesehen, unter einem vorgebbaren Winkel γ', hier 45°, von der oberen 4 bis in die untere Stirnfläche 5 des Kolbenringes 1 verlaufen. Dadurch, daß, abweichend zum Stand der Technik gemäß EP-B 0 742 875, die Lauffläche 2,10 nun nicht mehr geschwächt wird, ist auch keine Kerbwirkung mehr gegeben, die zu einem Kolbenringbruch führen könnte.

Figur 6 zeigt einen Querschnitt gemäß Linie A-A der Figur 1. Dargestellt ist der gasdicht ausgebildete Stoß 6, beinhaltend die einander überlappenden Endbereiche 7,8. Im Bereich des gasdicht ausgebildeten Stoßes 6 wird ein Gasdurchtritt von der oberen Stirnfläche 4 in den Bereich der unteren Stirnfläche 5 vermieden, so daß der Gasdurchtritt gezielt ausschließlich im Bereich der Durchgangsbohrungen 9 herbeigeführt werden kann. Eine konkrete Steuerung des Gasdruckes kann durch Modifizierung der Parameter α, β, γ, γ' sowie a und d variiert werden, so daß je nach Anwendungsfall ein optimal dafür geeigneter Kolbenring 1 erzeugt werden kann.

## Patentansprüche

1. Kolbenring, beinhaltend eine radial äußere Lauffläche (2), eine radial innere Umfangsfläche (3) sowie dazwischen verlaufende obere (4) und untere Stirnflächen (5), wobei ein an der oberen Stirnfläche (4) anstehender Druck, insbesondere Verbrennungsgasdruck, axial in Richtung der unteren Stirnfläche (5) abbaubar ist, **dadurch gekennzeichnet, daß** innerhalb des Kolbenringquerschnittes laufflächenseitig, in Umfangsrichtung gesehen, mehrere sich von der oberen (4) bis zur unteren Stirnfläche (5) erstreckende Durchgangsbohrungen (9) vorgebbaren Durchmessers (d) eingebracht sind.

2. Kolbenring nach Anspruch 1, **dadurch gekennzeichnet, daß** die Durchgangsbohrungen (9) unter einem vorgebbaren Neigungswinkel (y) von der oberen (4) in Richtung der unteren Stirnfläche (5) verlaufen.

3. Kolbenring nach Anspruch 1 oder 2, **dadurch gekennzeichnet, daß** die Durchgangsbohrungen (9) im Bereich der unteren Stirnfläche (5) in die Lauffläche (2,10) einlaufen.

4. Kolbenring nach einem der Ansprüche 1 bis 3, **dadurch gekennzeichnet, daß** die Bohrungen (9), in Umfangsrichtung gesehen, unter einem vorgebbaren Winkel (γ') von der oberen (4) in Richtung der unteren Stirnfläche (5) verlaufen.

5. Kolbenring nach einem der Ansprüche 1 bis 4, **dadurch gekennzeichnet, daß** der Neigungswinkel (γ) zwischen 70 und 80° beträgt.

6. Kolbenring nach einem der Ansprüche 1 bis 5, **dadurch gekennzeichnet, daß** der Winkel (γ') zwischen 40 und 50° beträgt.

7. Kolbenring nach einem der Ansprüche 1 bis 6, **dadurch gekennzeichnet, daß** der Durchmesser (d) der Durchgangsbohrungen (9) abhängig vom Kolbenringdurchmesser, zwischen 2 und 10 mm beträgt.

8. Kolbenring nach einem der Ansprüche 1 bis 7, **dadurch gekennzeichnet, daß** die Durchgangsbohrungen (9), in Umfangsrichtung gesehen, mit vorgebbarem Abstand
(α) zu einem geschlitzten, insbesondere gasdicht ausgebildeten Stoß (6) innerhalb des Kolbenringquerschnittes verlaufen.

9. Kolbenring nach einem der Ansprüche 1 bis 8, **dadurch gekennzeichnet, daß** die Durchgangsbohrungen (9), in Umfangsrichtung gesehen, mit vorgebbarem Abstand (β) zueinander vorgesehen sind.

10. Kolbenring nach einem der Ansprüche 1 bis 9, **dadurch gekennzeichnet, daß** die die Abstände definierenden Umfangswinkel (α,β) im wesentlichen gleich ausgebildet sind.

11. Kolbenring nach einem der Ansprüche 1 bis 10, **dadurch gekennzeichnet, daß** die Durchgangsbohrungen (9), in Umfangsrichtung gesehen, im wesentlichen in Stoßnähe, insbesondere in der Nähe des gasdicht ausgebildeten Bereiches (6), vorgesehen sind.
